# EUROPÄISCHE PATENTSCHRIFT

(11) **EP 2 983 868 B1**
(45) Veröffentlichungstag und Bekanntmachung des Hinweises auf die Patenterteilung: **20.01.2021**
(21) Anmeldenummer: 14712309.5
(22) Anmeldetag: 25.03.2014
(51) Int. Cl.: B26D 3/16, B23D 47/04, B25B 1/24, B23D 47/06

(54) **SPANNSYSTEM FÜR 7-FACH-SCHNITT**
CLAMPING SYSTEM FOR SEVENFOLD CUTTING
SYSTÈME DE SERRAGE POUR LA COUPE DE SEPT PROFILÉS

(30) Priorität: 08.04.2013 DE 102013103486
(43) Veröffentlichungstag der Anmeldung: 17.02.2016
(73) Patentinhaber: Rattunde AG, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2014/056005
(87) Internationale Veröffentlichungsnummer: WO 2014/166737

(56) Entgegenhaltungen:
- EP-A2- 0 318 300
- CN-Y- 201 432 147
- DE-B3-102009 058 036
- US-A- 4 475 607

## Beschreibung

Die Erfindung betrifft eine Anordnung umfassend einen Spanner und sieben in einer Längsrichtung ausgerichtete nebeneinander angeordnete Langprofile.

Zum Ablängen von Langprofilen, insbesondere metallischen Langprofilen oder Metallrohren, müssen die Langprofile während des Schneidvorganges eingespannt werden, um einen hochpräzisen Schnitt zu ermöglichen. Es ist bekannt, gleichzeitig vier Rohre für einen 4-fach-Schnitt mittels eines Spannsystems einzuspannen. Moderne Rohrverarbeitungsmaschinen ermöglichen es, in einem 4-fach-Schnitt etwa 11.000 Rohre pro Stunde zu schneiden.

Problematisch ist, dass die bekannten Spanner mit symmetrischen Aufnahmen nicht ohne Weiteres für einen 7-fach-Schnitt erweitert werden können, da mit einer einfachen Sechskantenspannung, also einer in einem Querschnitt exakt sechseckigen Aufnahme, die immer vorhandenen Durchmesserschwankungen von 0,1 bis 0,2 mm sowie Abweichungen von der exakten Kreisform der Rohre unweigerlich dazu führen würden, dass eines bzw. mehrere der sieben Rohre nicht fest eingespannt sind, sondern beim Schneiden mitdrehen.

In der DE 10 2009 058 036 B3 ist eine Spannvorrichtung für einen Rohrabschnitt, gemäß dem Oberbegriff des Anspruchs 1, offenbart.

Die Spannvorrichtung ermöglicht das individuelle Verstellen einzelner Zungen der Spannbacken, so dass eine Rohrmittelachse mit einer Sollachse der Spannvorrichtung exakt in Übereinstimmung gebracht werden kann, so dass ein nachträgliches Bearbeiten des Rohrendes, beispielsweise durch Anfasen in konzentrischer Weise, erfolgen kann.

Aus der EP 0 318 300 ist eine Spannvorrichtung für ein einzelnes Rohr bekannt. Die Spannvorrichtung kann mit positionsfesten Einlagen versehen werden, die den Innenradius der Spannvorrichtung verkleinern und somit das Einspannen von Rohren geringeren Durchmessers ermöglichen.

Aus der US 4,475,607 ist eine Spannvorrichtung für ein einzelnes Rohr bekannt. Die Spannvorrichtung ist hydraulisch betätigbar. Die Spannvorrichtung ist für ein Bohrwerkzeug bestimmt.

Es ist daher Aufgabe der vorliegenden Erfindung, eine eingangs genannte Anordnung zur Verfügung zu stellen, der das drehsichere Einspannen von sieben in einer Längsrichtung nebeneinander angeordneten Langprofilen für einen Ablängvorgang ermöglicht.

Die Aufgabe wird durch eine Anordnung mit den Merkmalen des Anspruchs 1 gelöst.

Die an der einen Spannbacke angeordnete und quer zur Längsrichtung wenigstens bereichsweise bewegliche Anlagefläche ist für zwei der sieben Langprofile und die an der anderen Spannbacke vorgesehene andere Aufnahme ist zur Anlage von vier anderen der sieben Langprofile vorgesehen. Die sieben Langprofile sind in einer Längsrichtung ausgerichtet und in einem Querschnitt senkrecht zur Längsrichtung nebeneinander, bündelförmig angeordnet. Einige Langprofile berühren sich, andere berühren sich dabei nicht.

Unter einem Langprofil werden insbesondere metallische Langprofile und darunter insbesondere Metallrohre verstanden.

Erfindungsgemäß wird von einer exakten und starren prismatischen Sechseck-Form der Aufnahme für die sieben Langprofile abgewichen; somit wird das drehfeste Einspannen von gleichzeitig sieben Langprofilen ermöglicht.

Die Langprofile sind vorzugsweise in einem Querschnitt senkrecht zur Längsrichtung alle kreisförmig. Im Querschnitt kreisförmige Langprofile sind besonders üblich. Unter kreisförmig werden hier auch geringe Abweichungen im Bereich von etwa 0,2 mm verstanden.

Die andere Spannbacke weist günstigerweise eine andere Aufnahme zur Anlage von vier der sieben Langprofile auf, die während des Spannvorgangs auch Kontakt mit anderen seitlichen Anlageflächen der anderen Aufnahme ausbilden.

Vorzugsweise sind die eine Aufnahme und günstigerweise auch die andere Aufnahme im Wesentlichen prismatisch ausgeformt. Dadurch wird eine drehsichere Einspannung verbessert.

In einer besonders bevorzugten Weiterbildung der Erfindung ist ein um eine in Längsrichtung ausgerichtete Drehachse drehbar gelagertes Ausgleichsstück vorgesehen, das die kippbare Anlagefläche aufweist. Die kippbare Anlagefläche bildet gleichsam eine bodenseitige Anlagefläche der einen, vorzugsweise im Wesentlichen prismatischen Aufnahme aus. Günstigerweise weist die andere Aufnahme zwei in einem Winkel von größer als 60° Grad aufeinander zulaufende, entgegen einer Spannrichtung der anderen Spannbacke, andere seitliche Anlagen auf. Dadurch liegen auch bei geringen Durchmesserschwankungen der sieben Rohre untereinander immer vier Langprofle an der anderen seitlichen Anlagefläche an.

Erfindungsgemäß sind sieben Langprofile in dem Spanner angeordnet, und ein zentrales Langprofil ist von sechs Langprofilen kranzförmig umgeben, und zwei Langprofile, die an der kippbaren Anlagefläche anliegen, berühren sich auch in einem gespannten Zustand des Spanners nicht. Dadurch bildet sich kein geschlossener Kraftverlauf im Querschnitt in Querrichtung, die senkrecht zur Längsrichtung angeordnet ist, aus.

Vorzugsweise berührt das zentrale Langprofil im gespannten Zustand die beiden Langprofile, die an der kippbaren bodenseitigen Anlagefläche anliegen, und berührt die beiden der anderen bodenseitigen Anlagefläche benachbarten Langprofile und berührt nicht die beiden entlang einem Luftspalt zwischen den gespannten Spannbacken verlaufenden Langprofile.

Besonders günstig umfasst eine Aufnahme das Ausgleichsstück, und die eine Aufnahme weist seitliche Anlageflächen auf, die im gespannten Zustand keinen Kontakt mit einem der Langprofile ausbilden.

Die erfindungsgemäßen relativen Anordnungen der Langprofile ermöglichen deren drehfestes Einspannen.

Die Erfindung wird anhand von zwei Ausführungsbeispielen in vierzehn Figuren beschrieben. Dabei zeigen:
- Fig. 1a: eine perspektivische Ansicht eines Spanners für vier Rohre gemäß dem Stand der Technik mit Sägeblatt,
- Fig. 1b: eine seitliche Ansicht des Spanners in Fig. 1a,
- Fig. 2a: eine perspektivische Ansicht eines erfindungsgemäßen Spanners einer ersten Ausführungsform für sieben Rohre mit Sägeblatt,
- Fig. 2b: eine seitliche Ansicht des Spanners in Fig. 2a,
- Fig. 3: eine seitliche Detailansicht in Fig. 2b mit sieben Rohren und eingezeichnetem Spannkraftverlauf, wenn die Rohre 1 bis 7 den gleichen Durchmesser haben,
- Fig. 4: eine Ansicht gemäß Fig. 3, wenn Rohr 1 einen kleineren Durchmesser hat als Rohre 2 bis 7,
- Fig. 5: eine Ansicht gemäß Fig. 3, wenn Rohr 2 einen kleineren Durchmesser hat als Rohr 1 und Rohre 3 bis 7,
- Fig. 6: eine Ansicht gemäß Fig. 3, wenn Rohr 3 einen kleineren Durchmesser hat als Rohr 1, Rohr 2, Rohre 4 bis 7,
- Fig. 7: eine Ansicht gemäß Fig. 3, wenn Rohr 4 einen kleineren Durchmesser hat als Rohre 1 bis 3 und Rohre 5 bis 7,
- Fig. 8: eine Ansicht gemäß Fig. 3, wenn Rohr 5 einen kleineren Durchmesser hat als Rohre 1 bis 4 und Rohre 6 bis 7,
- Fig. 9: eine Ansicht gemäß Fig. 3 wenn Rohr 6 einen kleineren Durchmesser hat als Rohre 1 bis 5 und Rohr 7,
- Fig. 10: eine seitliche Ansicht gemäß Fig. 3, wenn Rohr 7 einen kleineren Durchmesser hat als Rohre 1 bis 6,
- Fig. 11: eine perspektivische Ansicht eines nicht erfindungsgemäßen Spanners,
- Fig. 12: eine seitliche Ansicht des Spanners in Fig. 11.

Die Produktionsleistung von Rohrschneidemaschinen kann beträchtlich erhöht werden, wenn in einem Schneidvorgang gleichzeitig mehrere Rohre 1, 2, 3, 4, 5, 6, 7 abgelängt werden.

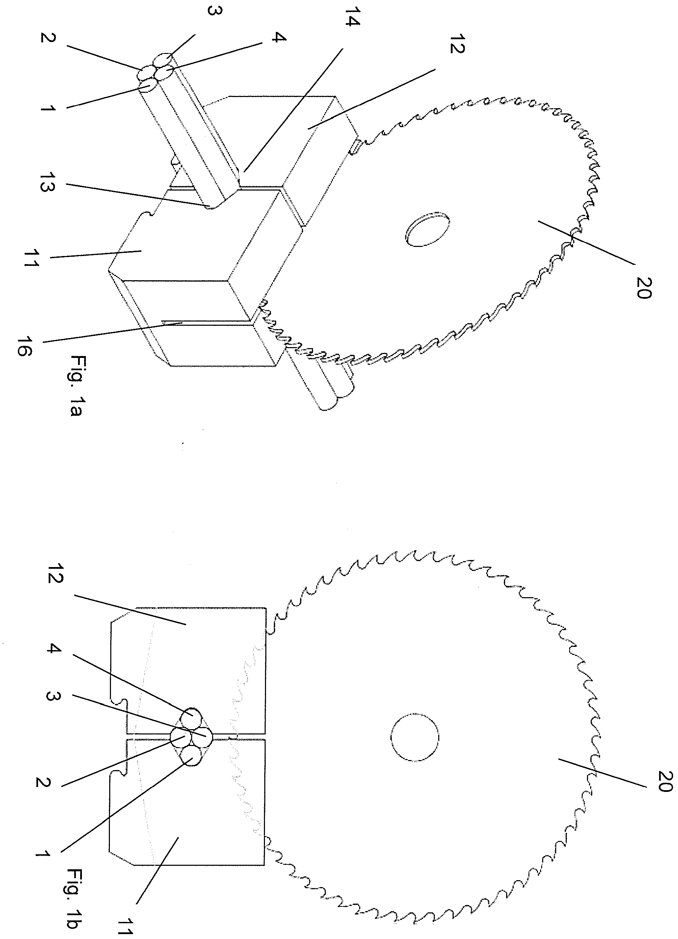

Die Fign. 1a und 1b zeigen einen bekannten Spanner 10, mit dem vier nebeneinander liegende, in einer Längsrichtung L ausgerichtete Rohre 1, 2, 3, 4 gleichzeitig drehfest einspannbar sind. Der Spanner weist zwei Spannbacken 11, 12 auf mit jeweils einer etwa trichterförmigen Aufnahme 13, 14. Die beiden Spannbacken 11, 12 sind aufeinander zu und voneinander weg verfahrbar. Die Rohre 1, 2, 3, 4 werden mittels eines Sägeblattes 20 durchschnitten, das in eine senkrecht zur Längsrichtung L der Rohre 1, 2, 3, 4 ausgebildete Nut 16 in den beiden Spannbacken 11, 12 eingeführt wird.

Üblicherweise weisen vier Rohre 1, 2, 3, 4 zum einen keine exakt gleichen Durchmesser untereinander auf, zum anderen sind die Rohre 1, 2, 3, 4 jeweils auch nicht exakt kreisrund ausgebildet. Für ein drehfestes Einspannen von vier Rohren 1, 2, 3, 4 durch einen Spanner 10 in den Fign. 1a und 1b spielen diese beiden Abweichungen keine Rolle. Auch bei Durchmesserunterschieden oder Abweichungen von der exakten Querschnittkreisform senkrecht zur Längsrichtung L können die vier Rohre 1, 2, 3, 4 immer gleichzeitig drehfest mittels zweier trichterförmiger, spiegelsymmetrisch zueinander ausgebildeter Aufnahmen 13, 14 eingespannt werden.

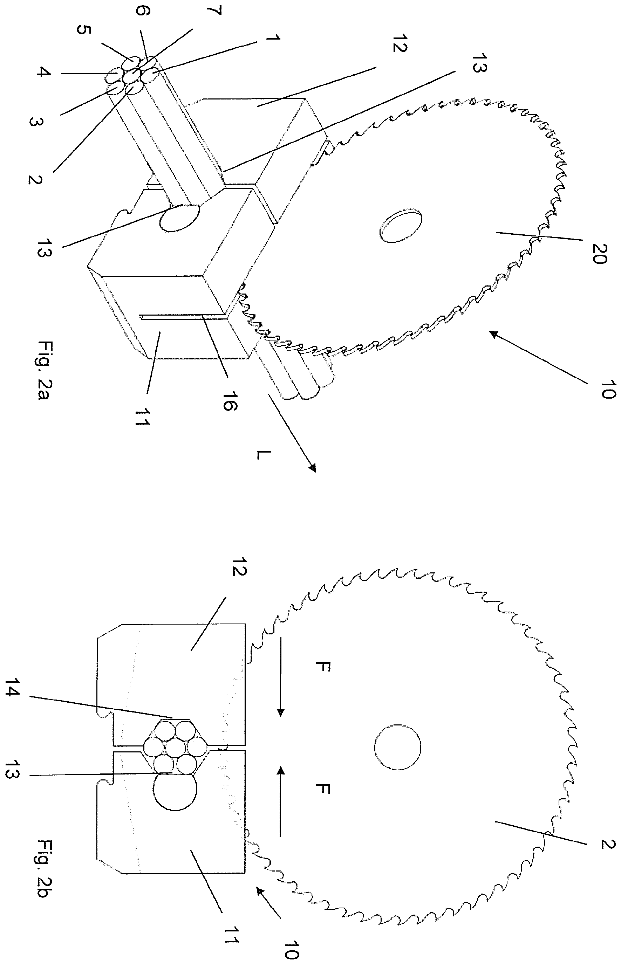

Problematisch ist die Erweiterung auf einen Spanner 10 für sieben Rohre 1, 2, 3, 4, 5, 6, 7 gemäß Fig. 2a und Fig. 2b. Ein zwei symmetrisch zueinander ausgebildete Aufnahmen 13, 14 aufweisender Spanner 10 für sieben Rohre 1, 2, 3, 4, 5, 6, 7, führt üblicherweise dazu, dass eines der Rohre 1, 2, 3, 4, 5, 6, 7, häufig das mittlere Rohr 7, nicht drehfest eingespannt wird.

Fig. 2a und 2b zeigen einen erfindungsgemäßen Spanner 10 in einer ersten Ausführungsform für sieben Rohre 1, 2, 3, 4, 5, 6, 7, mit zwei jeweils in einer Spannrichtung S, die senkrecht zur Längsrichtung L vorgesehen ist, hin und her verfahrbaren Spannbacken 11, 12, wobei die eine Spannbacke 11 eine Aufnahme 13 und die andere Spannbacke 12 eine andere Aufnahme 14 aufweist und die beiden Aufnahmen 13, 14 nicht exakt spiegelbildlich zueinander dimensioniert sind. Die eine Spannbacke 11 weist ein um eine in Längsrichtung L angeordnete Drehachse D drehbar gelagertes Ausgleichsstück 30 auf.

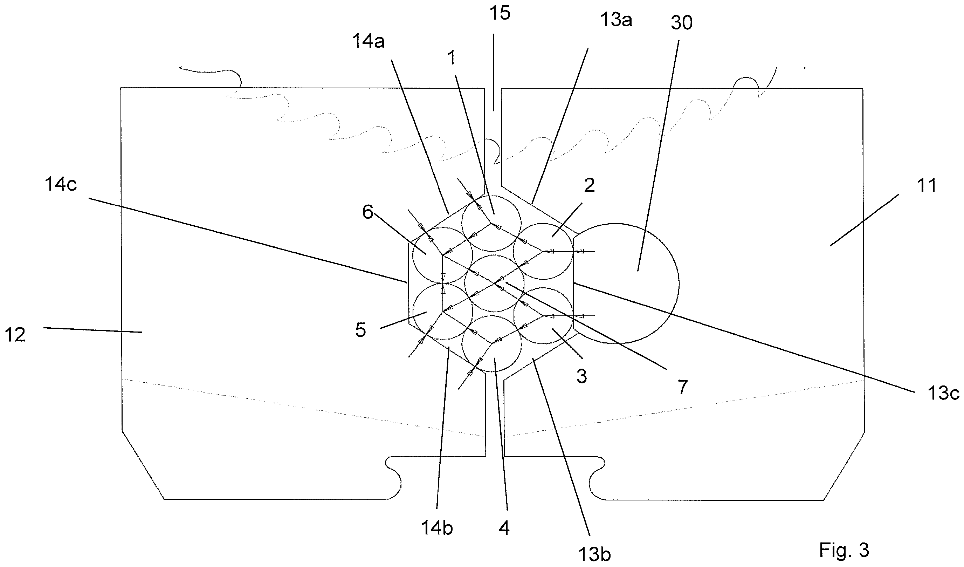

Fig. 3 zeigt eine vergrößerte seitliche Ansicht des erfindungsgemäßen Spanners 10 in Fig. 2b mit der einen Spannbacke 11 und der anderen Spannbacke 12. Zwischen den beiden Spannbacken 11, 12 ist ein Luftspalt 15 auch noch im gespannten Zustand der Fig. 3 ausgebildet. Die beiden Spannbacken 11, 12 berühren sich nicht, sondern sind durch den Luftspalt 15 vollständig voneinander getrennt.

In Fig. 3 weisen die sieben Rohre 1, 2, 3, 4, 5, 6, 7 untereinander einen im Querschnitt exakt gleichen Durchmesser auf. Das erste 1 und vierte Rohr 4 sind direkt am Luftspalt 15 angeordnet, das zweite 2 und dritte Rohr 3 berühren eine bewegliche bodenseitige Anlagefläche 13c, und das fünfte 5 und sechste Rohr 6 sind einer bodenseitigen Anlagefläche 14c benachbart angeordnet.

Die Rohre 1, 2, 3, 4, 5, 6, 7 sind hier alle exakt kreisförmig ausgebildet. Erfindungsgemäß bildet sich entlang der sechs, das zentrale Rohr 7 kranzförmig umgebenden Rohre 1, 2, 3, 4, 5, 6 kein kreisförmig geschlossener Spannkraftverlauf aus. In Fig. 3 berühren sich das zweite Rohr 2 und das dritte Rohr 3 nicht. In der Fig. 3 wie auch in den nachfolgenden Figuren berühren sich das erste Rohr 1 und das siebente Rohr 7 sowie das vierte Rohr 4 und das siebente Rohr 7 nicht, so dass zwischen ihnen keine Kraftübertragung stattfinden kann.

Die andere Aufnahme 14 ist im Querschnitt senkrecht zur Längsrichtung L prismatisch ausgeformt, wobei zwei seitliche Anlageflächen 14a, 14b, die entgegen der Spannkraftrichtung Q in einem Winkel von mehr als 60° Grad aufeinander zulaufen, und eine andere zwischen den beiden anderen seitlichen Anlageflächen 14a, 14b angeordnete bodenseitige Anlagefläche 14c vorgesehen sind.

Die eine Aufnahme 13 weist zwischen ihren beiden seitlichen Anlageflächen 13a, 13b eine relativ zur einen Spannbacke 11 bewegliche bodenseitige Anlagefläche 13c auf. Die eine Aufnahme 13 ist ebenfalls im Wesentlichen prismatisch ausgebildet, wobei bei einem vom Luftspalt 15 gesehen gleichen Abstand der Abstand der seitlichen Anlageflächen 13a, 13b größer ist als der Abstand der beiden anderen seitlichen Anlageflächen 14a, 14b.

Die bewegliche bodenseitige Anlagefläche 13c verläuft entlang der Drehachse D des Ausgleichsstücks 30. Im Querschnitt senkrecht zur Drehachse D entspricht die bewegliche bodenseitige Anlagefläche 13c einer Schnittlinie eines von dem kreisförmigen Ausgleichsstück 30 abgetrennten Segmentstücks.

Eine Höhe der anderen seitlichen Anlageflächen 14a, 14b entlang der Spannrichtung S ist so bemessen, dass eine vom Ausgleichsstück 30 auf das zweite und dritte Rohr 2, 3 ausgeübte Spannkraft F über das erste 1 bzw. vierte Rohr 4 senkrecht auf die jeweils andere seitliche Auflagefläche 14a, 14b der anderen Aufnahme 14 geführt ist. Das erste 1 und das zweite Rohr 2 sowie das dritte 3 und das vierte Rohr 4 berühren die seitlichen Anlageflächen 13a, 13b der einen Aufnahme 13 jedoch nicht. Die seitlichen Anlageflächen 13a, 13b der einen Aufnahme 13 sind damit für den eigentlichen Spannvorgang unbedeutend, sie halten jedoch kurz vor dem Spannen und kurz nach dem Spannen die sieben Rohre 1, 2, 3, 4, 5, 6, 7 in einer etwa kranzförmigen Anordnung mit dem zentralen Rohr 7. Aus dieser Anordnung bewegt die zunehmende Spannkraft F die Rohre 1, 2, 3, 4, 5, 6, 7 automatisch in die in Fig. 3 dargestellte Position.

Des Weiteren berühren das fünfte 5 und das sechste Rohr 6 nicht die andere bodenseitige Anlagefläche 14c der anderen Aufnahme 14, und es berühren sich auch nicht das siebente zentrale Rohr 7 und das erste Rohr 1 wie auch nicht das siebente Rohr 7 und das vierte Rohr 4. Die Pfeile in Fig. 3 zeigen den Spannkraftfluss durch die sieben Rohre 1, 2, 3, 4, 5, 6, 7 im gespannten Zustand.

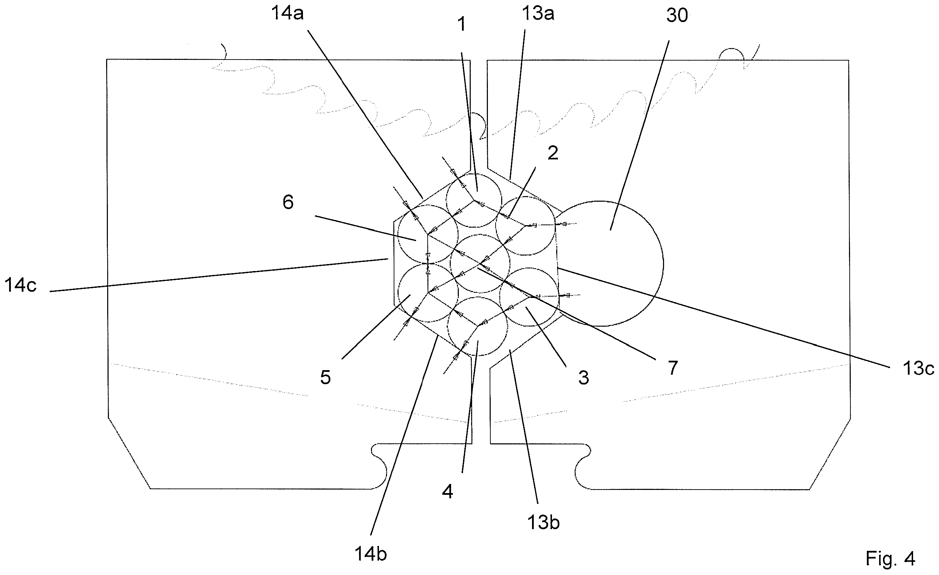

Die weiteren Figuren 4 bis 10 stellen die in Fig. 3 dargestellte Anordnung der sieben Rohre 1, 2, 3, 4, 5, 6, 7 dar, wobei jeweils ein Durchmesser eines der Rohre 1, 2, 3, 4, 5, 6, 7 kleiner gewählt ist als der der jeweils anderen Rohre 1, 2, 3, 4, 5, 6, 7, die untereinander in jeder Figur einen gleichen Durchmesser aufweisen.

Fig. 4 zeigt die Rohranordnung in Fig. 3, bei der jedoch das erste Rohr 1, das dem Luftspalt 15 direkt benachbart ist, einen kleineren Durchmesser aufweist als die Rohre 2 bis 7. Der Spannkraftverlauf durch die Rohre 1, 2, 3, 4, 5, 6, 7 ist durch die Pfeile auch hier dargestellt, es zeigt sich wiederum, dass die die bewegliche bodenseitige Anlagefläche 13c berührenden Rohre 2 und 3 sich gegenseitig nicht berühren und dadurch keine Kraftübertragung untereinander ermöglichen. Des Weiteren sind die der anderen bodenseitigen Anlagefläche 14c der anderen Aufnahme 14 direkt benachbarten Rohre fünf 5 und sechs 6 ein Stück weit von der anderen bodenseitigen Anlagefläche 14c beabstandet. Die Darstellung von Fig. 4 zeigt, dass jedes der sieben Rohre 1, 2, 3, 4, 5, 6, 7 fest eingespannt ist.

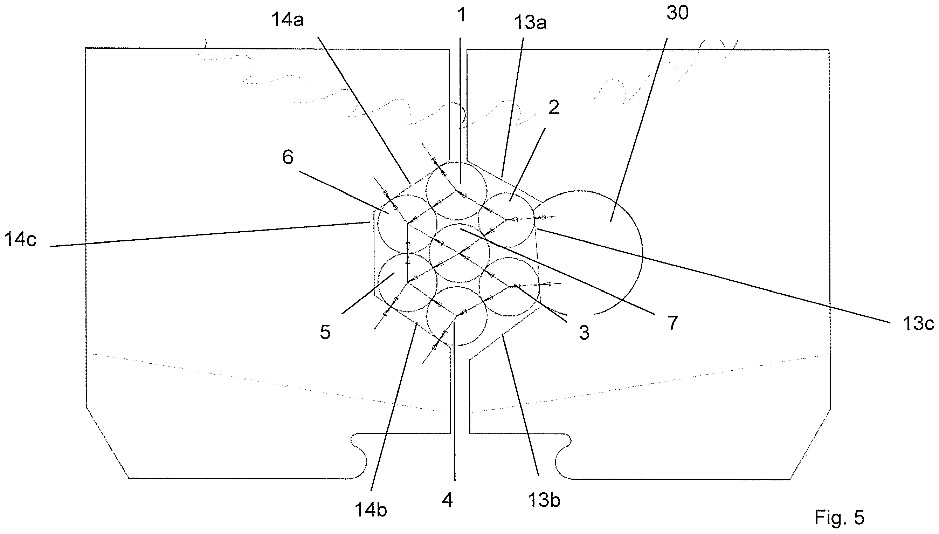

Fig. 5 zeigt die Anordnung der sieben Rohre 1, 2, 3, 4, 5, 6, 7 mit einem im Durchmesser kleineren zweiten Rohr 2.

In Fig. 4 und Fig. 5 ist das Ausgleichsstück 30 um einen kleinen Winkel entgegen dem Uhrzeigersinn um die Drehachse D gekippt.

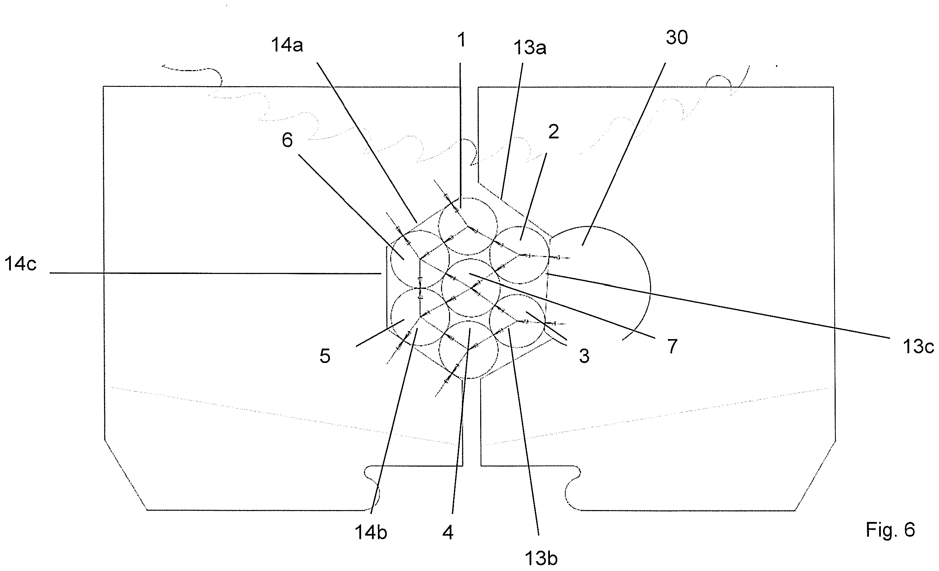

Entsprechend ist in Fig. 6 die Darstellung bei einem im Durchmesser kleineren dritten Rohr 3 gezeigt. In der Fig. 6 ist zu erkennen, dass das Ausgleichsstück 30 um seine Drehachse D im Uhrzeigersinn etwas gekippt ist.

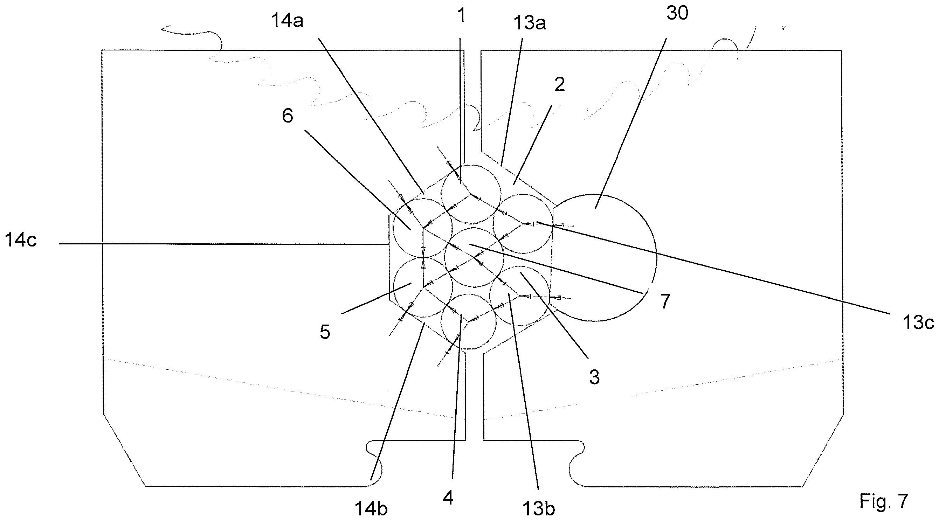

In allen Fällen wird durch das Kippen des Ausgleichsstücks 30 sichergestellt, dass eine Spannkraft F auf sowohl das zweite 2 als auch auf das dritte Rohr 3 ausgeübt wird. Fig. 7 zeigt eine Anordnung mit kleinerem viertem Rohr 4. Auch hier ist das Ausgleichsstück 30 im Uhrzeigersinn ein Stück weit um die Drehachse D gedreht, dies entspricht der quasi entgegengesetzten Anordnung der Fig. 4, bei der das Ausgleichsstück 30 entgegen dem Uhrzeigersinn gedreht ist.

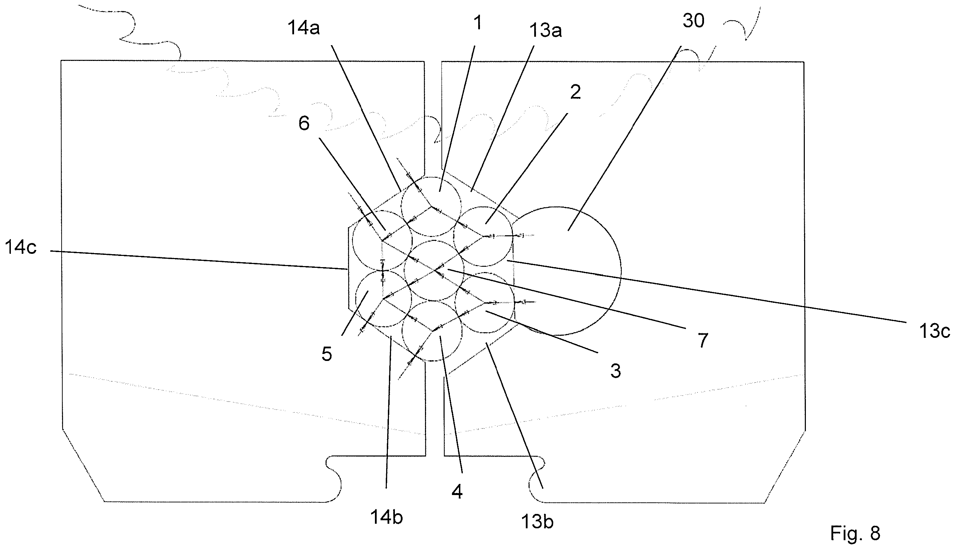

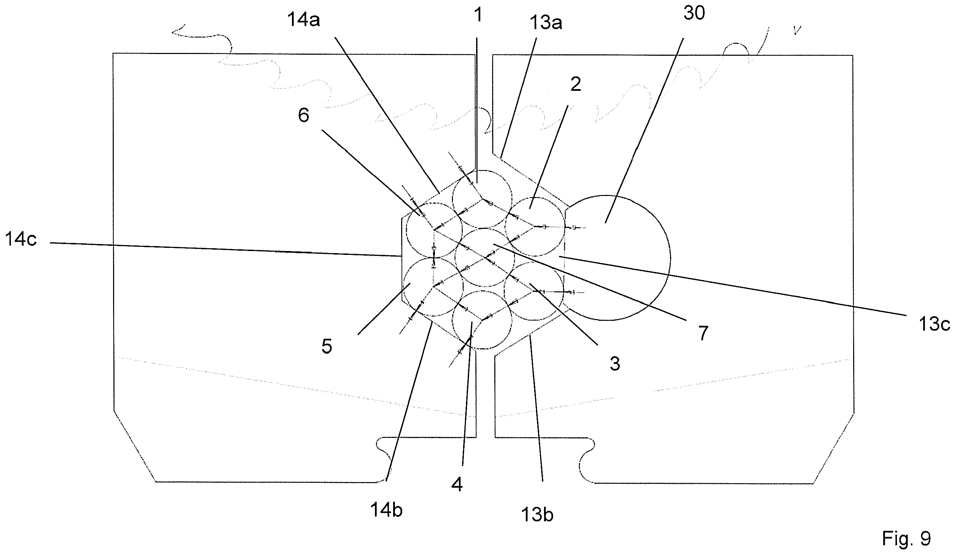

Fign. 8 und 9 zeigen Anordnungen mit kleineren Rohrdurchmessern des fünften 5 bzw. sechsten Rohres 6. Das Ausgleichsstück 30 ist hier auch jeweils entsprechend gekippt, wobei in beiden Fällen die Rohre 5, 6 keinen direkten Kontakt mit der anderen bodenseitigen Anlagefläche 14c der anderen Aufnahme 14 ausbilden.

In allen Fällen ist dadurch, dass der relative Winkel zwischen den beiden anderen seitlichen Anlageflächen 14a, 14b der anderen Aufnahme 14 größer als 60° Grad ist, gewährleistet, dass das zentrale Rohr 7 keinen Kontakt mit den beiden dem Luftspalt 15 benachbarten Rohren 1 und 4 ausbildet.

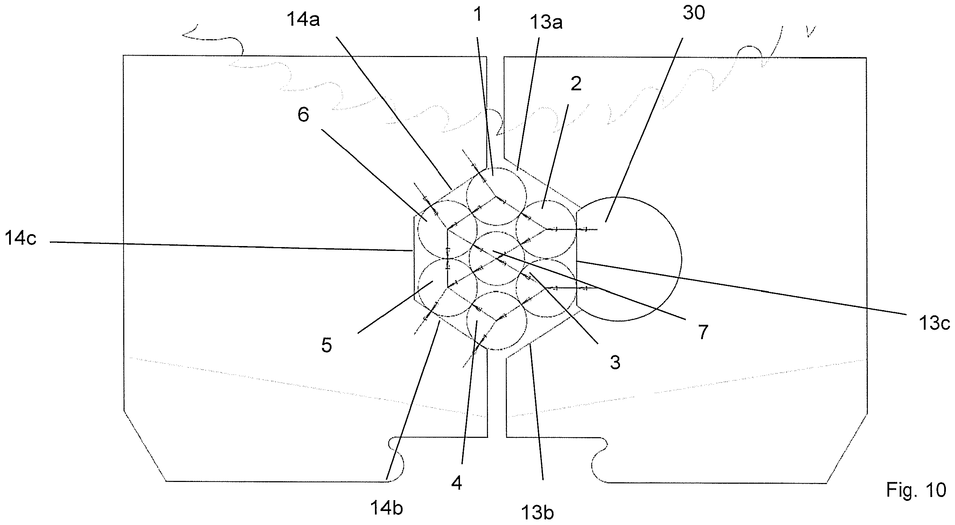

Die Fig. 10 zeigt die Anordnung bei kleinerem zentralem Rohr 7. Auch hier berühren sich das zweite 2 und das dritte Rohr 3 nicht.

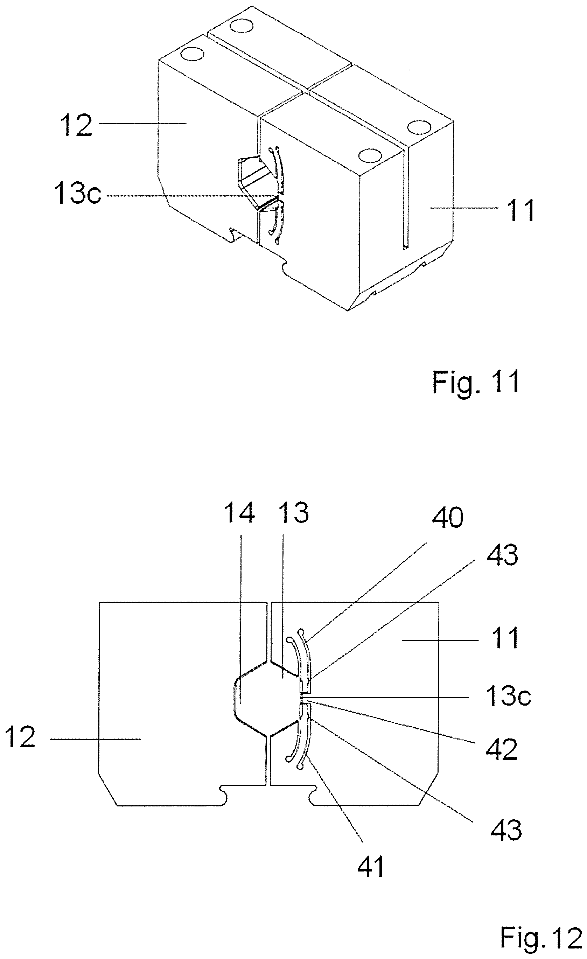

Fig. 11 zeigt eine Ausführungsform eines nicht erfindungsgemäßen Spanners 10 für sieben parallel zueinander bündelförmig angeordnete Langprofilabschnitte, vorzugsweise im Querschnitt kreisförmige Metallrohre 1, 2, 3, 4, 5, 6, 7. Gemäß Fig. 12 unterscheidet sich die zweite Ausführungsform von der ersten Ausführungsform dadurch, dass die bewegliche Anlagefläche 13c zwei elastische Elemente aufweist 40, 41. Die elastischen Elemente 40, 41 sind die Enden von federnden Zungen, die integral in Form eines Drahterodierverfahrens aus der einen Spannbacke 11 ausgebildet sind. Die Enden der beiden federnden Zungen 40, 41 weisen zueinander und sind durch einen positionsfesten Bereich 42 der bodenseitigen Anlagefläche 13c voneinander beabstandet. Die federnden Elemente 40, 41 sowie der positionsfeste Bereich 42 der bodenseitigen Anlagefläche 13c bilden zusammen die bewegliche bodenseitige Anlagefläche 13 c aus. Die der Aufnahme 13 abgewandte Seite der federnden Zungen 40, 41 weist jeweils eine Hubbegrenzung in Form eines von der Aufnahme 13 wegweisenden Vorsprunges 43 auf. Zwischen dem Vorsprung 43 und der Wandung der einen Spannbacke 11 ist ein Luftspalt 15 vorhanden, der in der Zeichnung nicht zu erkennen ist. Die beiden federnden Zungen 40, 41 federn unabhängig voneinander im Gegensatz zum drehbar gelagerten Ausgleichsstück 30. Es ist somit eine genaue drehfeste Einspannung von sieben Langprofilabschnitten 1, 2, 3, 4, 5, 6, 7 möglich. Die beiden federnden Elemente sind Enden von integral aus der einen Spannbacke 11 herauserodierten elastischen Zungen.

### Bezugszeichenliste

- 1: Rohr
- 2: Rohr
- 3: Rohr
- 4: Rohr
- 5: Rohr
- 6: Rohr
- 7: Rohr

- 10: Spanner
- 11: Spannbacke
- 12: Spannbacke
- 13: Aufnahme
- 13a: seitliche Anlagefläche
- 13b: seitliche Anlagefläche
- 13c: bewegliche/kippbare bodenseitige Anlagefläche
- 14: Aufnahme
- 14a: seitliche Anlagefläche
- 14b: seitliche Anlagefläche
- 14c: bodenseitige Anlagefläche
- 15: Luftspalt
- 16: Nut

- 20: Sägeblatt
- 30: Ausgleichsstück

- 40: elastisches / federndes Element
- 41: elastisches / federndes Element
- 42: positionsfester Bereich
- 43: Vorsprung

- D: Drehachse
- F: Spannkraft
- L: Längsrichtung
- Q: Spannkraftrichtung
- S: Spannrichtung

## Patentansprüche

1. Anordnung umfassend einen Spanner (10) und in einer Längsrichtung (L) ausgerichtete nebeneinander angeordnete Langprofile (1, 2, 3, 4, 5, 6, 7) mit einer Spannbacke (11) und einer anderen Spannbacke (12), die aufeinander zu und voneinander weg verfahrbar sind, mit einer Aufnahme (13) in der einen Spannbacke (11), die eine gegenüber der einen Spannbacke (11) quer zur Längsrichtung (L) zumindest bereichsweise bewegliche bodenseitige Anlagefläche (13c) für zwei der Langprofile (2, 3) aufweist und
mit einer in der anderen Spannbacke (12) vorgesehenen anderen Aufnahme (14) zur Anlage von vier anderen der Langprofile (1, 4, 5, 6),
und der Abstand von Bereichen der beweglichen bodenseitigen Anlagefläche (13c) der einen Aufnahme (13) zu direkt gegenüberliegenden bodenseitigen Bereichen der Anlagefläche (14c) der anderen Aufnahme (14) ist veränderbar, und die beiden Aufnahmen (13, 14) sind nicht exakt spiegelbildlich zueinander dimensioniert,
**dadurch gekennzeichnet, dass**
dass die bewegliche bodenseitige Anlagefläche (13c) kippbar ist,
sieben Langprofile (1, 2, 3, 4, 5, 6, 7) vorgesehen sind und in dem Spanner (10) angeordnet sind und ein zentrales Langprofil (7) von sechs Langprofilen (1, 2, 3, 4, 5, 6) kranzförmig umgeben ist und zwei Langprofile (2, 3), die an der kippbaren bodenseitigen Anlagefläche (13c) anliegen, sich auch in einem gespannten Zustand des Spanners (10) nicht berühren.

2. Anordnung nach Anspruch 1,
**dadurch gekennzeichnet, dass** die eine Aufnahme (13) und die andere Aufnahme (14) im Querschnitt senkrecht zur Längsrichtung (L) muldenförmig in die jeweilige Spannbacke (11, 12) hinein ausgeformt sind.

3. Anordnung nach Anspruch 1 oder 2,
**dadurch gekennzeichnet, dass** die eine Aufnahme (13) und/oder die andere Aufnahme (14) im Querschnitt prismatisch ausgeformt sind.

4. Anordnung nach Anspruch 1, 2 oder 3,
**dadurch gekennzeichnet, dass** die bewegliche Anlagefläche (13c) wenigstens ein in die eine Aufnahme (13) hinein federndes Element (40, 41) aufweist.

5. Anordnung nach Anspruch 4,
**dadurch gekennzeichnet, dass** in der einen Spannbacke (11) zwei elastische Elemente (40, 41) vorgesehen sind und zwischen den elastischen Elementen (40, 41) ein gegenüber der übrigen einen Spannbacke (11) positionsfester Bereich (42) der bodenseitigen Anlagefläche 13c vorgesehen ist.

6. Anordnung nach einem der Ansprüche 1 bis 5,
**gekennzeichnet durch** ein um eine in Längsrichtung (L) angeordnete Drehachse (D) drehbar gelagertes Ausgleichsstück (30), das die kippbare Anlagefläche (13c) aufweist.

7. Anordnung nach einem der Ansprüche 1 bis 6,
**dadurch gekennzeichnet, dass** die andere Aufnahme (14) zwei in einem Winkel von größer als 60° Grad aufeinander zulaufende andere seitliche Anlageflächen (14a, 14b) aufweist.

8. Anordnung nach Anspruch 1,
**dadurch gekennzeichnet, dass** das zentrale Langprofil (7) im gespannten Zustand die beiden Langprofile (2, 3) berührt, die an der beweglichen bodenseitigen Anlagefläche (13c) anliegen und die beiden der anderen bodenseitigen Anlagefläche (14c) benachbarten Langprofile (5, 6) berührt und die beiden entlang einem Luftspalt (15) zwischen den gespannten Spannbacken (11, 12) verlaufenden Langprofile (1, 4) nicht berührt.

9. Anordnung nach einem der Ansprüche 1 bis 8,
**dadurch gekennzeichnet, dass** die eine Aufnahme (13) das Ausgleichsstück (30) umfasst und die eine Aufnahme (13) seitliche Anlageflächen (13a, 13b) aufweist, die im gespannten Zustand keinen Kontakt mit einem der Langprofile (1, 2, 3, 4, 5, 6, 7) ausbilden.

## Claims

1. Arrangement comprising a clamp (10) and longitudinal profiles (1, 2, 3, 4, 5, 6, 7) arranged next to one another and oriented in a longitudinal direction (L) with a clamping jaw (11) and another clamping jaw (12) which are movable towards one another and away from one another, with a receiving area (13) in the one clamping jaw (11), which receiving area has a bearing face (13c) at the bottom for two of the longitudinal profiles (2, 3), said bearing face being movable at least in some regions relative to the clamping jaw (11) transversely to the longitudinal direction (L), and with another receiving area (14) provided in the other clamping jaw (12) for the bearing of four others of the longitudinal profiles (1, 4, 5, 6)
and the distance of regions of the moveable bearing face (13c) at the bottom of the one receiving area (13) is changeable towards regions of the bearing face (14c) at the bottom of the receiving area (14) arranged directly opposite to one another and the two receiving areas (13, 14) are not dimensioned exactly laterally reversed to each other,
**characterized in that** the moveable bearing face at the bottom is tiltable and seven longitudinal profiles (1, 2, 3, 4, 5, 6, 7) are provided and arranged in the clamp (10) and a central longitudinal profile (7) is surrounded by six longitudinal profiles (1, 2, 3, 4, 5, 6) in an annular fashion and two longitudinal pofiles (2, 3) which bear against the tiltable bottom bearing face (13 c) do not make contact contact with one another even in a clamped state of the clamp (10).

2. Arrangement according to claim 1,
**characterized in that** the one receiving area (13) and the other receiving area (14) are formed as a trough in the respective clamping jaw (11, 12) perpendicular to the longitudinal direction (L) as seen in cross section.

3. Arrangement according to claim 1 or 2,
**characterized in that** the one receiving area (13) and/or the other receiving area (14) are formed in a prismatic shape as seen in cross section.

4. Arrangement according to claim 1, 2 or 3,
**characterized in that** the movable bearing face (13c) has at least one element (40, 41) flexing into the one receiving area (13).

5. Arrangement according to claim 4,
**characterized in that** two elastic elements (40, 41) are provided in the one clamping jaw (11), and a region (42) of the bottom bearing face (13c) which is stationary relative to the rest of said clamping jaw (11) is provided between the elastic elements (40,41).

6. Arrangement according to any of claims 1 to 5,
**characterized by** a compensating piece (30) which has the tiltable bearing face (13c) and which is mounted such as to be able to rotate about an axis of rotation (D) arranged in the longitudinal direction (L).

7. Arrangement according to any of claims 1 to 6,
**characterized in that** the other receiving area (14) has two other lateral bearing faces (14a, 14b) running towards one another at an angle greater than 60°.

8. Arrangement according to claim 1,
**characterized in that** the central longitudinal profile (7), in the clamped state, makes contact with the two longitudinal profiles (2, 3) which bear against the movable bottom bearing face (13c), and makes contact with the two longitudinal profiles (5, 6) adjacent to the other bottom bearing face (14c) and does not make contact with the two longitudinal profiles (1, 4) running along an air gap (15) between the clamped clamping jaws (11, 12).

9. Arrangement according to any of claims 1 to 8,
**characterized in that** the one receiving area (13) includes the compensating piece (30) and the one receiving area (13) has lateral bearing faces (13a, 13b) which in the clamped state are not in contact with any of the longitudinal profiles (1, 2, 3, 4, 5, 6, 7).

## Revendications

1. Arrangement comprenant un organe de serrage (10) et des profilés longs (1, 2, 3, 4, 5, 6, 6) juxtaposés en étant orientés dans un sens longitudinal (L) avec une mâchoire de serrage (11) et une autre mâchoire de serrage (12) qui sont déplaçables l'une vers l'autre et en s'éloignant l'une de l'autre, avec un logement (13) dans l'une des mâchoires de serrage (11) qui présente une surface d'appui (13c) côté fond qui est au moins partiellement mobile pour deux des profilés longs (2, 3) relatif à l'une des mâchoires de serrage (11) transversalement par rapport au sens longitudinal (L) et avec un autre logement (14) prévu dans l'autre mâchoire de serrage (12) pour l'appui de quatre autres profilés longs (1, 4, 5, 6) et l'écart des zones de la surface d'appui (13c) mobile côté fond de l'un des logements (13) est réglable par rapport à des zones côté fond directement opposées de la surface d'appui (14c) de l'autre logement (14) et les deux logements (13, 14) ne sont pas dimensionnés de manière exactement symétriques l'un par rapport à l'autre, **caractérisé en ce que** la surface d'appui mobile côté fond est basculante, que sept profilés longs (1, 2, 3, 4 5, 6, 7) sont prévus et placés dans l'organe de serrage (10) et un profilé long central (7) est entouré par six profilés longs (1, 2, 3, 4, 5, 6) en forme de couronne et deux profilés longs (2, 3) qui reposent sur la surface d'appui basculante côté fond (13c) ne se touchent pas, même lorsque l'organe de serrage (10) est dans un état serré.

2. Arrangement selon la revendication 1, **caractérisé en ce que** l'un des logements (13) et l'autre logement (14) sont moulés en forme de creux dans la section transversale perpendiculairement au sens longitudinal (L) à l'intérieur de la mâchoire de serrage respective (11, 12) en y rentrant.

3. Arrangement selon la revendication 1 ou 2, **caractérisé en ce que** l'un des logements (13) et/ou l'autre logement (14) sont moulés avec une section transversale de forme prismatique.

4. Arrangement selon la revendication 1, 2 ou 3, **caractérisé en ce que** la surface d'appui mobile (13c) présente au moins un élément (40, 41) qui entre de manière élastique dans l'un des logements (13).

5. Arrangement selon la revendication 4, **caractérisé en ce que** deux éléments élastiques (40, 41) sont prévus dans l'une des mâchoires de serrage (11) et qu'une zone fixe en position (42) de la surface d'appui côté fond (13c) est prévue entre les éléments élastiques (40, 41) relatif à la mâchoire de serrage restante (11).

6. Arrangement selon l'une des revendications 1 à 5, **caractérisé par** une pièce de compensation (30) positionnée rotative autour d'un axe de rotation (D) placé dans le sens longitudinal (L).

7. Arrangement selon l'une des revendications 1 à 6, **caractérisé en ce que** l'autre logement (14) présente deux autres surfaces d'appui latérales (14a, 14b) convergentes dans un angle supérieur à 60°.

8. Arrangement selon la revendication 1, **caractérisé en ce que** le profilé long central (7) touche, à l'état serré, les deux profilés longs (2, 3) qui reposent sur la surface d'appui (13c) mobile côté fond et touche les deux profilés longs (5, 6) voisins de l'autre surface d'appui (14c) côté fond et ne touche pas les deux profilés longs (1, 4) qui s'étendent entre une lame d'air (15) entre les mâchoires de serrage serrées (11, 12).

9. Arrangement selon l'une des revendications 1 à 8, **caractérisé en ce que** l'un des logements (13) comprend la pièce de compensation (30) et l'autre logement (13) présente des surfaces d'appui latérales (13a, 13b) qui ne forment pas de contact, à l'état serré, avec l'un des profilés longs (1, 2, 3, 4, 5, 6, 7).
